# EUROPEAN PATENT APPLICATION

(11) **EP 4 269 206 A1**
(43) Date of publication of application: **01.11.2023**
(21) Application number: 22169813.7
(22) Date of filing: 25.04.2022
(51) Int. Cl.: B60W 50/10, B60W 30/09, B60W 50/14

(54) **METHOD AND SYSTEM FOR ACTIVATING OR DEACTIVATING A DRIVER SUPPORT SYSTEM**

(71) Applicant: Volvo Car Corporation, 40531 Göteborg (SE)
(72) Inventor: Oresten, Jonas, 40531 Göteborg (SE); Johansson, Conny, 40531 Göteborg (SE); De Paul Gbehi, Vincent, 40531 Göteborg (SE); Keshavarz, Mansour, 40531 Göteborg (SE); Rahimi, Mahin, 40531 Göteborg (SE); Eqbal, Qudus, 40531 Göteborg (SE); Stervic, Per, 40531 Göteborg (SE)
(74) Representative: Maiwald GmbH

(57) **Abstract**

A computer-implemented method for providing de-/activation data for at least one driver support system of a vehicle for supporting a driver of the vehicle, comprising: obtaining vehicle speed data (10) of the vehicle; obtaining surrounding sensor data (20) of at least one surrounding sensor of the vehicle; obtaining driver position sensor data (30) of at least one driver position sensor of the vehicle; and determining de-/activation data (40) for the at least one driver support system based on the vehicle speed data, the surrounding sensor data, and the driver position sensor data.

## Description

### TECHNICAL FIELD

The present disclosure relates to a computer-implemented method for providing de-/activation data for at least one driver support system of a vehicle for supporting a driver of the vehicle, a system for providing de-/activation data for at least one driver support system of a vehicle for supporting a driver of the vehicle and a corresponding computer program element.

### BACKGROUND ART

In the prior art, driver support systems are described which, for example, display objects in the surroundings of a vehicle to the driver of the vehicle, whereby these driver support systems are controlled depending on the state and/or driving situation of the vehicle. Thereby, a variety of driver support systems can be controlled, which provide the driver with variety information, e.g. not needed information to solve the driving situation, which may cause the driver to be stressed due to the driving situation and/or due to the variety information of the driver support systems.

In view of this, it is found that a further need exists to provide an improved method for controlling a driver support system of a vehicle for supporting a driver of the vehicle.

### SUMMARY

In the view of the above, it is an object of the present disclosure to provide an improved method for controlling a driver support system of a vehicle for supporting a driver of the vehicle.

These and other objects, which become apparent upon reading the following description, are solved by the subject matter of the independent claims. The dependent claims refer to preferred examples of the disclosure.

According to a first aspect, a computer-implemented method for providing de-/activation data for at least one driver support system of a vehicle for supporting a driver of the vehicle is provided, comprising:
obtaining vehicle speed data of the vehicle;
obtaining surrounding sensor data of at least one surrounding sensor of the vehicle;
obtaining driver position sensor data of at least one driver position sensor of the vehicle; and
determining de-/activation data for the at least one driver support system based on the vehicle speed data, the surrounding sensor data, and the driver position sensor data.

In other words, the present disclosure may provide a detecting of a driver position in the driver seat when vehicle speed is low, e.g. under 10 km/h, and/or of a presence of at least one object nearby to the vehicle and/or within the driving envelope. If the driver may be leaned too much towards the steering wheel, then that could be an indication that the driver may be stressed and is not confident and tries to get a better view for the space around the car. Then the needed driver support systems regarding the leaning position of the driver and/or the presence of an object nearby to the vehicle and/or within the driving envelope may be activated.

The vehicle speed data, the surrounding sensor data and/or the driver position sensor data may be obtained by multiple sensors. Further, the multiple sensors may comprise multiple sensor types. Whereby the use of multiple sensors and/or multiple sensor types may have a positive impact on speed, accuracy and/or fail-safety of the computer-implemented method.

The vehicle speed data and/or the surrounding sensor data may comprise data of one or a combination, of sensor types such as for example LiDAR, radar, ultrasonic, camera or other sensors known for detection purposes.

The driver position sensor data may comprise data of one or a combination of sensor types such as, for example, ultrasonic, radar, camera or other sensors for driver monitoring.

In an implementation, the vehicle speed data may comprise at least one speed value, which represents a movement, acceleration and/or traveling speed of the vehicle.

In an implementation, the surrounding sensor data, may comprise:
object existence value for each object in the field of view of the at least one surrounding sensor;
object dimension value for each object in the field of view of the at least one surrounding sensor; and/or
object location value for each of the objects in the field of view of the at least one surrounding sensor.

The object dimension value may comprise values regarding the surface for each object in the field of view of the at least one surrounding sensor, whereby the surface values in particular comprises size and/or height of the object.

In an implementation, the driver position sensor data may comprise at least a position value, which represents a field of view of at least one sensor of the vehicle, in particular, the inside of the vehicle, whereby the field of view may be determined of acoustic data, optical data, mechanical data, capacitive data and/or inductive data of at least one sensor of the vehicle. The position value may represent a lateral position and/or a longitudinal position of the driver.

In an implementation, the determining may comprise generating a model of the surroundings of the vehicle based on each object in the field of view of the at least one surrounding sensor, in particular based on the object existence value, object dimension value and/or object location value.

In other words, the sensor data may be fused to create a single environmental map of the surroundings, whereby this map may be a coordinate system where some areas may be occupied by objects, while other areas are free and driveable space. This information may be used in combination with the driver position to determine if automatic activation of driver assistance may be required.

In an implementation, the determining may compare the vehicle speed data to a vehicle speed data threshold, the surrounding sensor data to a surrounding sensor data threshold and/or the driver position data to a driver position data threshold;
if the comparison of the vehicle speed data to the vehicle speed data threshold, the surrounding sensor data to the surrounding sensor data threshold and the driver position data to the driver position data threshold results in a passing value;
then the de-/activation data comprises an activation value;
else the de-/activation data comprises a deactivation value.

In other words, a forward leaning position of the driver in combination with a low object located close to the front of the car may be a strong indication that the driver needs help and hence the appropriate support response can be triggered.

In an implementation, the determining of the de-/activation data may comprise at least one dedicated de-/activation value to control a dedicated driver support system of the at least one driver support system based on the location of an object in the field of view of the at least one surrounding sensor.

In an implementation, the vehicle speed data threshold may comprise a speed value of a movement and/or traveling speed of the vehicle less than or equal of 20 km/h, 15 km/h, 10 km/h or 8 km/h.

In an implementation, the surrounding sensor data threshold may comprise:
existence value equal to presence of an object in the field of a driving envelope to the vehicle of the at least one surrounding sensor;
dimension value equal to dimension of an object in the field of view of the at least one surrounding sensor;
location value equal to location of an object in the field of view of the at least one surrounding sensor; and/or
model value based on the model of the surroundings of the vehicle.

In an implementation, the surrounding sensor data threshold may represent a value, which may comprise the presence of an object in the field of a driving envelope to the vehicle of the at least one surrounding sensor according to the object value of the surrounding sensor data; and/or the surrounding sensor data threshold represent a model value, which may comprise the presence of an object in the field of a driving envelope to the model of the surroundings of the vehicle.

In an implementation, the driver position data threshold may represent a value, which may comprise the leaning of a driver of the vehicle to a steering wheel of the vehicle according to a value position of the driver position data.

A further aspect of the present disclosure relates to a system for providing de-/activation data for at least one driver support system of a vehicle for supporting a driver of the vehicle, comprising:
a first obtaining unit configured to obtain vehicle speed data of the vehicle;
a second obtaining unit configured to obtain surrounding sensor data of at least one surrounding sensor of the vehicle;
a third obtaining unit configured to obtain driver position sensor data of at least one driver position sensor of the vehicle; and
a determining unit configured to determine de-/activations data for the at least one driver support system based on the vehicle speed data, the surrounding data, and the driver position sensor data.

In other word, objects within the driving envelope may be detected using existing on-board sensors and/or driver positioning may be detected by driver monitoring cameras.

In an implementation, the system may comprise: a data providing unit configured to provide de-/activation data for the at least one driver support system which may be controlled based on the de-/activation data.

A further aspect of the present disclosure relates to computer program element with instructions, which, when executed on the computing device of a computing environment, may be configured to carry out the steps of the method described above in the system described above.

### BRIEF DESCRIPTION OF DRAWINGS

In the following, the disclosure is described exemplarily with reference to the enclosed figures, in which:
- **Figure 1**: is a schematic diagram of an example of a process of the disclosed method;
- **Figure 2**: is a schematic overview of an example of the disclosed system;
- **Figure 3**: is a schematic illustration of an example of a vehicle with the disclosed system and disclosed method and a distant object in the envelope;
- **Figure 4**: is a schematic illustration of an example of a vehicle with the disclosed system and disclosed method and a closed object in the envelope;
- **Figure 5**: is a schematic illustration of an example of the detectable body movements of the driver position sensor of a vehicle.

Notably, the figures are merely schematic representations and serve only to illustrate examples of the present disclosure. Identical or equivalent elements are in principle provided with the same reference signs.

### DETAILED DESCRIPTION

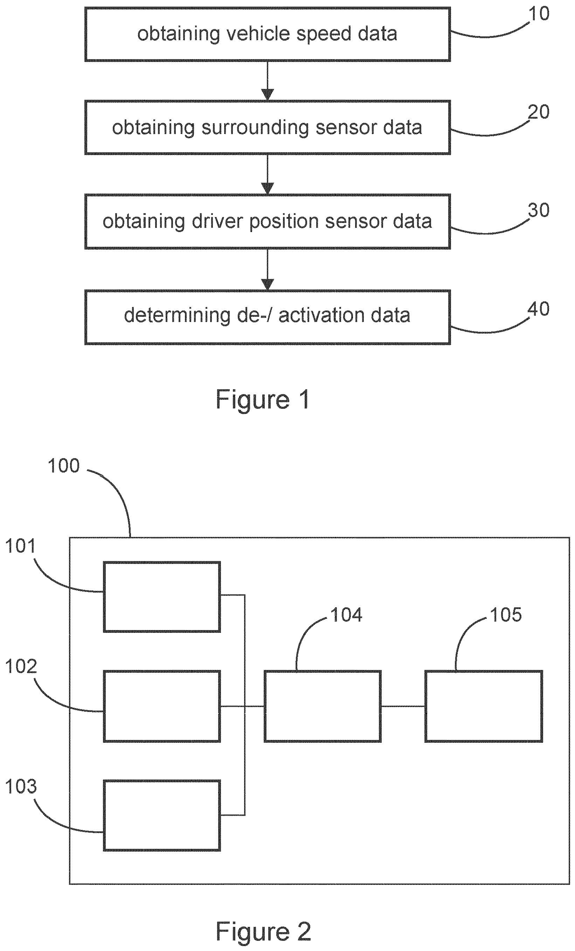

Figure 1 shows a schematic diagram of a process of the disclosed method, whereby the method comprises the steps of obtaining vehicle speed data 10 of the vehicle; obtaining surrounding sensor data 20 of at least one surrounding sensor of the vehicle; obtaining driver position sensor data 30 of at least one driver position sensor of the vehicle; and determining de-/activation data 40 for the at least one driver support system based on the vehicle speed data, the surrounding sensor data, and the driver position sensor data.

Figure 2 shows a schematic overview of an implementation of a system 100 for providing de-/activation data for at least one driver support system of a vehicle for supporting a driver of the vehicle

The system comprises a first obtaining unit 101 configured to obtain vehicle speed data of the vehicle; a second obtaining unit 102 configured to obtain surrounding sensor data of at least one surrounding sensor of the vehicle; a third obtaining unit 103 configured to obtain driver position sensor data of at least one driver position sensor of the vehicle; and a determining unit 104 configured to determine de-/activation data for the at least one driver support system based on the vehicle speed data, the surrounding data, and the driver position sensor data.

Further the system 100 comprises a data providing unit 105 configured to provide de-/activation data for the at least one driver support system which is controlled based on the de-/activation data.

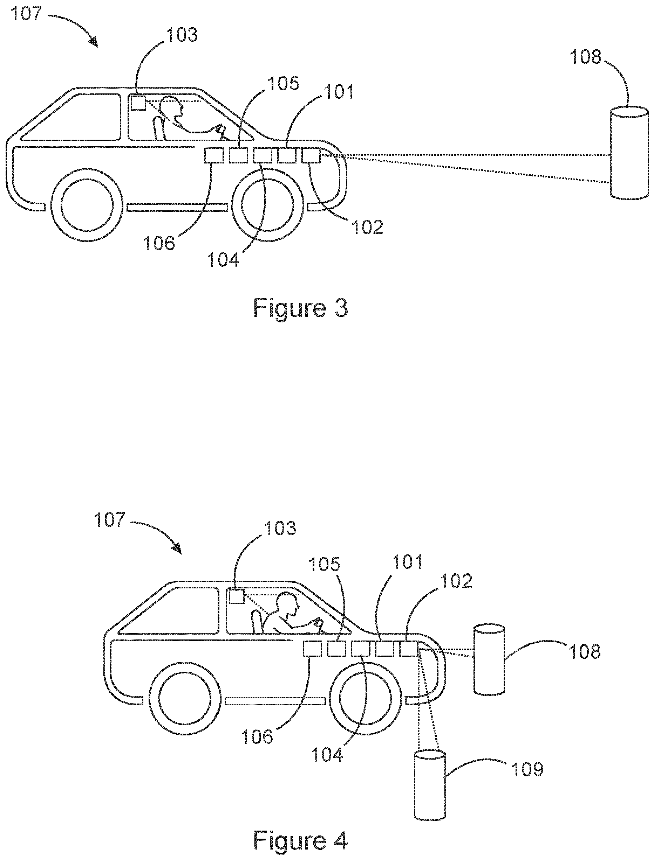

Figure 3 shows a schematic illustration of a vehicle 107 with a system for providing de-/activation data for at least one driver support system 106 of a vehicle for supporting a driver of the vehicle. Whereby the systems comprises a first obtaining unit 101 configured to obtain vehicle speed data of the vehicle, a second obtaining unit 102 configured to obtain surrounding sensor data of at least one surrounding sensor of the vehicle, a third obtaining unit 103 configured to obtain driver position sensor data of at least one driver position sensor of the vehicle; and a determining unit 104 configured to determine de-/activations data for the at least one driver support system based on the vehicle speed data, the surrounding data, and the driver position sensor data. Further the system comprises a data providing unit 105 configured to provide de-/activation data for the at least one driver support system 106.

In addition, it is shown that the vehicle 107 drives on an envelope straight ahead in the direction to a first object 108. Whereby the first obtaining unit 101 detects a slow speed of the vehicle 107, the second obtaining unit 102 detects the first object 108 in the envelope, and the third obtaining unit 103 detects a normal sitting position of a driver of the vehicle 107. In this case, a threshold for detecting slow speed of the vehicle and a threshold for detecting the first object 108 are triggered, however, the driver is sitting in a normal seating position so that the at least one driver support system 106 will not be activated or remain deactivated.

Figure 4 shows a schematic illustration of the vehicle 107 from Figure 3, whereby the vehicle 107 is in a position on the envelope closer to the first object 108. Whereby the first obtaining unit 101 detects a slow speed of the vehicle 107, the second obtaining unit 102 detects the first object 108 in the envelope and a second object 109 next to the vehicle 107, and the third obtaining unit 103 detects a sitting position differing from a normal sitting position of a driver of the vehicle 107.

In this case, a threshold for detecting slow speed of the vehicle, a threshold for detecting the first object 108 and a threshold for detecting the driver is sitting in a seating position differing from a normal sitting position are triggered. Therefore, the determining unit 104 generates a control data to activate a specific driver support system of the at least one driver support system 106 with respect to the first object 108. Here, the activated specific driver support system helps the driver in this specific driving situation to avoid for example a collision with the first object 108.

Moreover, none of the at least one driver assistance system 106 is activated to prevent a collision with the second object 109 because the second object 109 is not within the envelope. For example, the second object 109 can be hidden for the specific driver support system or not displayed to the driver.

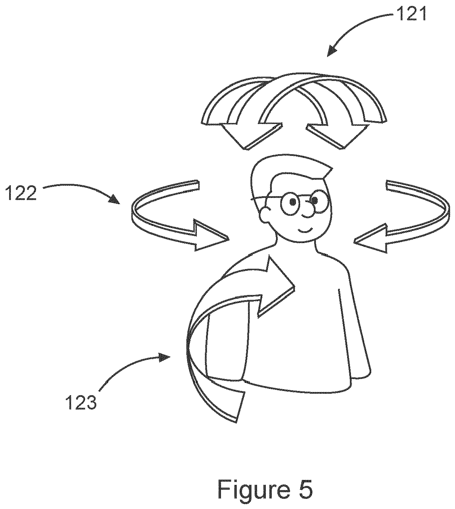

Figure 5 shows a schematic illustration of a driver of a vehicle with the respective detectable axes or movement ranges of the driver, whereby movement can for example understand as leaning of the driver. At least a first axis 121, a second axis 122 and/or a third axis 123 can be detected.

For example, the first axis 121 represents a pitching motion of a driver's head, the second axis 122 represents a rotating motion of a driver's head, and the third axis 123 represents a tilting motion of the driver's upper body.

Other variations to the disclosed example can be understood and effected by those skilled in the art in practicing the claimed subject matter, from the study of the drawings, the disclosure, and the appended claims. In particular, respective parts/functions of the respective example described above may also be combined with each other. In the claims, the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: obtaining vehicle speed data
- 20: obtaining surrounding sensor data
- 30: obtaining driver position sensor data
- 40: determining de-/activation data
- 100: system
- 101: first obtaining unit
- 102: second obtaining unit
- 103: third obtaining unit
- 104: determining unit
- 105: data providing unit
- 106: at least one driver support system
- 107: vehicle
- 108: first object
- 109: second object
- 121: first axis
- 122: second axis
- 123: third axis

## Claims

1. A computer-implemented method for providing de-/activation data for at least one driver support system of a vehicle for supporting a driver of the vehicle, comprising:
obtaining vehicle speed data (10) of the vehicle;
obtaining surrounding sensor data (20) of at least one surrounding sensor of the vehicle;
obtaining driver position sensor data (30) of at least one driver position sensor of the vehicle; and
determining de-/activation data (40) for the at least one driver support system based on the vehicle speed data, the surrounding sensor data, and the driver position sensor data.

2. Method according claim 1, the vehicle speed data comprises at least one speed value, which represents a movement, acceleration and/or traveling speed of the vehicle.

3. Method according to claim 1 or claim 2, the surrounding sensor data, comprising:
object existence value for each object in the field of view of the at least one surrounding sensor;
object dimension value for each object in the field of view of the at least one surrounding sensor; and/or
object location value for each of the objects in the field of view of the at least one surrounding sensor.

4. Method according to any one of the preceding claims, the driver position sensor data comprises
at least a position value, which represents a field of view of at least one sensor of the vehicle, in particular the inside of the vehicle, whereby the field of view is determined of acoustic data, optical data, mechanical data, capacitive data and/or inductive data of at least one sensor of the vehicle.

5. Method according to any one of the preceding claims, the determining comprises generating a model of the surroundings of the vehicle based on each object in the field of view of the at least one surrounding sensor, in particular based on the object existence value, object dimension value and/or object location value.

6. Method according to any one of the preceding claims, the determining compares the vehicle speed data to a vehicle speed data threshold, the surrounding sensor data to a surrounding sensor data threshold and/or the driver position data to a driver position data threshold,
if the comparison of the vehicle speed data to the vehicle speed data threshold, the surrounding sensor data to the surrounding sensor data threshold and the driver position data to the driver position data threshold results in a passing value,
then the de-/activation data comprises an activation value;
else the de-/activation data comprises a deactivation value.

7. Method according to any one of the preceding claims, the determining of the de-/activation data comprises at least one dedicated de-/activation value to control a dedicated driver support system of the at least one driver support system based on the location of an object in the field of view of the at least one surrounding sensor.

8. Method according to claim 6 or claim 7, the vehicle speed data threshold comprises a speed value of a movement and/or traveling speed of the vehicle less than or equal of 20 km/h, 15 km/h, 10 km/h or 8 km/h.

9. Method according claims 6 to 8, the surrounding sensor data threshold comprising:
existence value equal to presence of an object in the field of a driving envelope to the vehicle of the at least one surrounding sensor;
dimension value equal to dimension of an object in the field of view of the at least one surrounding sensor;
location value equal to location of an object in the field of view of the at least one surrounding sensor; and/or
model value based on the model of the surroundings of the vehicle.

10. Method according claims 6 to 9, the surrounding sensor data threshold represent a value comprising the presence of an object in the field of a driving envelope of the vehicle in the field of view of the at least one surrounding sensor according to the object value of the surrounding sensor data; and/or the surrounding sensor data threshold represent a model value, comprising the presence of an object in the field of a driving envelope to the model of the surroundings of the vehicle.

11. Method according claims 6 to 10, the driver position data threshold represents a value comprising the leaning of a driver of the vehicle to a steering wheel of the vehicle according to a value position of the driver position data.

12. A system for providing de-/activation data for at least one driver support system of a vehicle for supporting a driver of the vehicle, comprising:
a first obtaining unit (101) configured to obtain vehicle speed data of the vehicle;
a second obtaining unit (102) configured to obtain surrounding sensor data of at least one surrounding sensor of the vehicle;
a third obtaining unit (103) configured to obtain driver position sensor data of at least one driver position sensor of the vehicle; and
a determining unit (104) configured to determine de-/activations data for the at least one driver support system based on the vehicle speed data, the surrounding data, and the driver position sensor data.

13. System according to claim 12, further comprising:
a data providing unit (105) configured to provide de-/activation data for the at least one driver support system which is controlled based on the de-/activation data.

14. Computer program element with instructions, which, when executed on the computing device of a computing environment, is configured to carry out the steps of the method according to any one of the claims 1 to 11 in a system according to one of the claims 12 or 13.
